# EUROPEAN PATENT SPECIFICATION

(11) **EP 1 165 385 B1**
(45) Date of publication and mention of the grant of the patent: **20.04.2005**
(21) Application number: 00914403.1
(22) Date of filing: 24.02.2000
(51) Int. Cl.: B65D 19/42

(54) **TRANSPORTATION MEANS**
TRANSPORTMITTEL
MOYEN DE TRANSPORT

(30) Priority: 01.03.1999 SE 9900717
(43) Date of publication of application: 02.01.2002
(73) Proprietor: Arca Systems AB, 284 80 Perstorp (SE)
(72) Inventor: Broadley, Mike, Davenham, Cheshire CW9 8LX (GB)
(74) Representative: HOFFMANN - EITLE
(86) International application number: PCT/SE2000/000361
(87) International publication number: WO 2000/051898

(56) References cited:
- WO-A1-98/42585
- DE-A1- 3 618 422
- GB-A- 904 198
- GB-A- 1 583 763
- GB-A- 2 280 166
- GB-A- 2 281 897

## Description

The present invention relates to a transportation means comprising a pallet-like carrying structure provided with wheels.

Transportation means consisting of a carrying structure provided with wheels on the lower side has been known for a long time. They are most often of a format adapted to containers used for transportation an storage of goods. Most common formats, as seen from above, are 0.4 x 0.6 metres and 0.6 x 0.8 metres. The transportation means do, of course, need to be transported empty from time to time. In order to do that, the transportation means need to be stacked on top of each other. Since they are provided with wheels they will roll around and a stack will be impossible to handle. There are a number of way to secure such a stack.

One known such way is to alternately turn the transportation means 90° so that they rest, not on their wheels, but on the carrying structure itself. In order to secure the stack, the carrying structure is provided with guiding means on the rim. This solution is known from GB 2 207 894. The disadvantage with this solution is that the stack will not be adapted to any pallet format standard. Such a stack will therefore be a bit bulky.

Another way to solve the problem is shown in GB 0 904 198 where the upper surface of the carrying structure is provided with small pockets which is intended to accommodate the wheels. The problems with this solution is that it is a bit difficult to position the transportation means exactly enough to make the wheels engage the pockets.

A slight improvement upon GB 0 904 198 is known from EP 0 675 829. The upper surface has here been provided with a bowl-like structure with a shape that corresponds to the radius of the swivel castor wheel as rotated around the swivelling axis. It will be a bit easier to position a transportation means according to EP 0 675 829 when compared to GB 0 904 198 but the design will allow some sideways movement which does not provide a perfect vertical alignment of the stack.

A variation of EP 0 675 829 which also gives some improvement upon the same is known from GB 2 281 897 where the bowl-like shapes known from EP 0 675 829 have been provided with sloping partition walls guiding the wheels into four narrow pockets. The disadvantage with this solution is that swivel castor wheels might be stuck on top of the partition wall. You will furthermore have to position the transportation means rather exactly in order to make it fall into the correct position.

All of the above transportation means suffer from the disadvantage that they have to be positioned onto one another by being lowered from above in a more or less vertically aligned position when being stacked. This works rather well, although it is time consuming, as long as the stack is relatively low. It will however be rather difficult to position the transportation means when the stack reaches shoulder height and above. This is specialty pronounced when they are heavy. There is also an ergonomical aspect to the stacking since the transportation means will have to be lifted into engagement. Neck, back and shoulder problems are most likelly to occur if this stacking operation is repeated for a longer period of time.

According to the present invention a transportation means which is much easier to handle has been achieved. The invention relates to a transportation means comprising a pallet-like carrying structure with two long sides, two short sides, four corners, an upper surface and a lower surface. The carrying structure is provided with wheels at each of the four corners. At least two of the wheels are of the swivel castor wheel type. The upper surface is furthermore provided with receiving means which are intended to receive the wheels of a second transportation means stacked on top of a first transportation means so that a number of such transportation means may be stacked, and fixated horizontally, on top of each other. The invention is characterised in that the upper surface is provided with two narrow long side channels arranged parallel to the long sides and stretching from one short side to the other. The long side channels are placed at a distance from each other which is mainly equal to the distance between the wheels, as seen from a short side. The transportation means may be placed on top of each other by rolling them into engagement with each other in a lengthways direction.

The upper surface is preferably provided with a rim used for locating and horizontally fixate goods, placed on top of the upper surface. Each short side end of the long side channels is furthermore provided with a channel stopper, which channel stopper is connected to the rim or being a part of the rim.

The long side channels are preferably provided with inner channel stoppers placed at a distance from each of the short side ends of the long side channels, which distance is adapted to the radius of the wheels. A wheel is hereby prevented from moving inwards in the long side channel. The inner channel stoppers are suitably placed at a position corresponding to the vertical swivelling axis of the swivel castor wheels.

According to one embodiment of the invention the upper surface is provided with a pair of secondary channels placed parallel to the short sides and crossing the long side channels. The longitudinal centreline of each of the secondary channels is preferably coinciding with the centreline of the inner channel stopper and thereby also the swivelling axis of the swivel castor wheels.

It will hereby be possible to roll a transportation means provided with four swivel castor wheels into engagement from any of the long sides or short sides.

Each short side end of the secondary channels is preferably provided with a secondary channel stopper, which secondary channel stopper is connected to the rim or being a part of the rim.

The carrying structure can be made of many different materials. Thermoplastic materials are, however, the ones most suited for the purpose. Among the most suited thermoplastic materials can be mentioned polyethylene, polypropylene, poly amide, polystyrene and acryl-butadiene-styrene. It is also possible to add reinforcing fibres to the material. Among processes possible for the manufacturing of a carrying structure of a transportation means according to the invention can be mentioned injection moulding, blow moulding, rotation moulding and twin sheet moulding.

The invention is explained further together with enclosed drawings, showing different embodiments of the invention wherein,
- figure 1 shows, in perspective a first embodiment of a transport means 1 according to the invention.
- figure 2 shows, in perspective a second embodiment of a transport means I according to the invention.

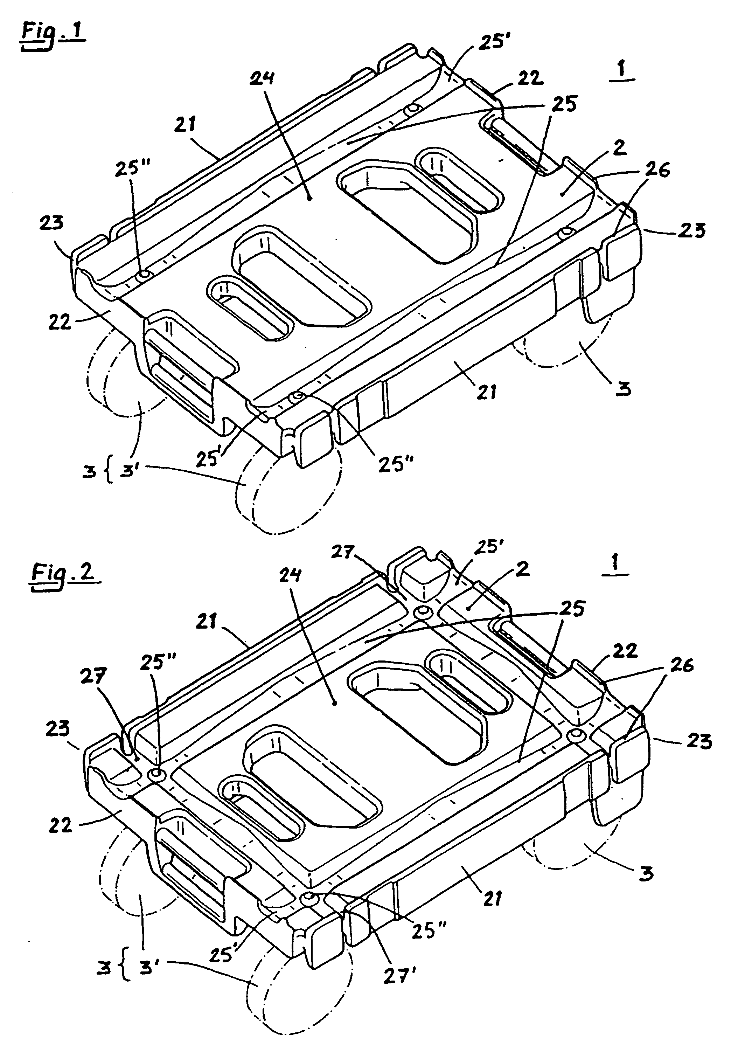

Figure 1 shows a transportation means 1 comprising a pallet-like carrying structure 2 with two long sides 21, two short sides 22, four corners 23, an upper surface 24 and a lower surface 25. The carrying structure is provided with wheels 3 at each of the four corners 23 of which two of the wheels 3 are of the swivel castor wheel type 3'. The upper surface 24 is furthermore provided with receiving means which are intended to receive the wheels 3 of a second transportation means 1 stacked on top of a first transportation means I so that a number of such transportation means may be stacked, and fixated horizontally, on top of each other. The upper surface 24 is provided with two narrow long side channels 25 arranged parallel to the long sides 21 and stretching from one short side 22 to the other. The long side channels 25 are placed at a distance from each other which is mainly equal to the distance between the wheels 3, as seen from a short side 22. Transportation means I may hereby be placed on top of each other by rolling them into engagement with each other in a lengthways direction. The upper surface 24 is provided with a rim 26 used for locating and horizontally fixate gods, placed on top of the upper surface 24. Each short side end of the long side channels 25 is provided with a channel stopper 25'. This channel stopper 25' is a part of the rim 26. The long side channels 25 are provided with inner channel stoppers 25" placed at a distance from each of the short side ends of the long side channels 25, which distance is adapted to the radius of the wheels 3 so that the wheels 3 are prevented from moving inwards in the long side channel 25. The inner channel stoppers 25" are placed at a position corresponding to the vertical swivelling axis of the swivel castor wheels 3'.

Figure 2 shows a second embodiment of a transportation means I according to the invention. The embodiment shown in figure 2 corresponds in the main with the one shown in figure 1. The upper surface is, however, further provided with a pair of secondary channels 27 placed parallel to the short sides and crossing the long side channels 25. The longitudinal centreline of each of the secondary channels 27 is coinciding with the centreline of the inner channel stopper 25" and thereby also the swivelling axis of the swivel castor wheels 3'. Each short side end of the secondary channels 27 is provided with a secondary channel stopper 27', which secondary channel stopper 25' is a part of the rim 26.

The invention is not limited to the embodiments shown, since it can be varied in different ways within the scope of the invention. It is for example possible to provide a transportation means according to the invention with four swivel castor wheels 3'. It will then be possible to roll such a transportation means 1 with an upper surface 24 as shown in figure 2 into engagement from any the two short sides 21 or long sides 22.

## Claims

1. Transportation means (1) comprising a pallet-like carrying structure (2) with two long sides (21), two short sides (22), four corners (23), an upper surface (24) and a lower surface (25), the carrying structure being provided with wheels (3) at each of the four corners (23) of which at least two of the wheels (3) are of the swivel castor wheel type (3'), the upper surface (24) furthermore being provided with receiving means which are intended to receive the wheels (3) of a second transportation means (1) stacked on top of a first transportation means (1) so that a number of such transportation means may be stacked, and fixated horizontally, on top of each other, **characterized in that** the upper surface (24) is provided with two narrow long side channels (25) arranged parallel to the long sides (21) and stretching from one short side (22) to the other, the long side channels (25) being placed at a distance from each other which is mainly equal to the distance between the wheels (3), as seen from a short side (22), wherein transportation means (1) may be placed on top of each other by rolling them into engagement with each other in a lengthways direction.

2. Transportation means (1) according to claim 1, **characterized in that** the upper surface (24) is provided with a rim (26) used for locating and horizontally fixate gods, placed on top of the upper surface (24), and that each short side end of the long side channels (25) is provided with a channel stopper (25'), which channel stopper (25') is connected to the rim (26) or being a part of the rim (26).

3. Transportation means (1) according to claim 1 or 2 **characterized in that** the long side channels (25) are provided with inner channel stoppers (25") placed at a distance from each of the short side ends of the long side channels (25), which distance is adapted to the radius of the wheels (3) so that a wheel (3) is prevented from moving inwards in the long side channel (25).

4. Transportation means (1) according to claim 3 **characterized in that** the inner channel stoppers (25") are placed at a position corresponding to the vertical swivelling axis of the swivel castor wheels (3').

5. Transportation means (1) according to claim 3 or 4 **characterised in that** the upper surface is provided with a pair of secondary channels (27) placed parallel to the short sides and crossing the long side channels (25), that the longitudinal centreline of each of the secondary channels (27) is coinciding with the centreline of the inner channel stopper (25") and thereby also the swivelling axis of the swivel castor wheels (3').

6. Transportation means (1) according to claim 5, **characterized in that** the each short side end of the secondary channels (27) is provided with a secondary channel stopper (27'), which secondary channel stopper (25') is connected to the rim (26) or being a part of the rim (26).

## Patentansprüche

1. Transportmittel (1), das eine Paletten-artige tragende Struktur (2) mit zwei langen Seiten (21), zwei kurzen Seiten (22), vier Ecken (23), einer Oberseite (24) und eine Unterseite (25) umfasst, wobei die tragende Struktur an jeder der vier Ecken mit Rädern (3) versehen ist, von denen zumindest zwei Räder (3) Schwenkrollenartige Räder (3') sind und die Oberseite (24) des Weiteren mit Aufnahmen versehen ist, die dafür gedacht sind, die Räder eines zweiten, auf dem ersten Transportmittel (1) gestapelten Transportmittels (1) aufzunehmen, so dass eine Anzahl solcher Transportmittel gestapelt werden kann und übereinander waagrecht befestigt werden kann, **dadurch gekennzeichnet, dass** die Oberseite (24) mit zwei schmalen, längsseitigen Nuten (25) versehen ist, die parallel zu den langen Seiten (21) angeordnet sind und sich von einer kurzen Seite (22) zur anderen erstrecken, wobei die längsseitigen Nuten (25) in einer Entfernung voneinander angeordnet sind, die, von einer kurzen Seite (22) aus betrachtet, größtenteils gleich der Entfernung zwischen den Rädern (3) ist, wobei Transportmittel (1) übereinander gestellt werden können indem sie in einer Längsrichtung zum miteinander Einrasten gerollt werden.

2. Transportmittel (1) nach Anspruch 1, **dadurch gekennzeichnet, dass** die Oberseite (24) mit einem Rand (26) versehen ist, der zur Lokalisierung und horizontalen Befestigung von auf die Oberseite (24) gestellten Waren dient, und dass jedes der kurzen Seite zugewandte Ende der längsseitigen Nut (25) mit einem Nutstopper (25') versehen ist, der mit dem Rand (26) verbunden ist oder ein Teil des Randes (26) ist.

3. Transportmittel (1) nach Anspruch 1 oder 2, **dadurch gekennzeichnet, dass** die längsseitigen Nuten (25) mit inneren Nutstoppern (25") versehen sind, die in einer Entfernung von jedem der den kurzen Seiten zugewandten Enden der längsseitigen Nuten (25) angeordnet sind, welche so an den Radius des Rads (3) angepasst ist, dass ein Rad (3) daran gehindert wird, sich in der längsseitigen Nut (25) nach innen zu bewegen.

4. Transportmittel (1) nach Anspruch 3, **dadurch gekennzeichnet, dass** die inneren Nutstopper (25") an eine Position gestellt sind, die der vertikalen Schwenkachse der Schwenkrollen-artigen Räder (3') entspricht.

5. Transportmittel (1) nach Anspruch 3 oder 4, **dadurch gekennzeichnet, dass** die Oberseite mit einem Paar von sekundären Nuten (27) versehen ist, die parallel zu den kurzen Seiten angeordnet sind und die längsseitigen Nuten (25) kreuzen, und dass die longitudinale Mittellinie jeder der sekundären Nuten (27) mit der Mittellinie der inneren Nutstopper (25") und dadurch auch der Schwenkachse der Schwenkrollen-artigen Räder (3') zusammenfällt.

6. Transportmittel (1) nach Anspruch 5, **dadurch gekennzeichnet, dass** jedes der kurzen Seite zugewandte Ende der sekundären Nut (27) mit einem sekundären Nutstopper (27') versehen ist, der mit dem Rand (26) verbunden ist oder ein Teil des Randes (26) ist.

## Revendications

1. Moyen de transport (1) comprenant une structure de support du type palette (2) avec deux côtés longs (21), deux côtés courts (22), quatre coins (23), une surface supérieure (24) et une surface inférieure (25), la structure de support étant pourvue de roues (3) à chacun des quatre coins (23) dont au moins deux des roues (3) sont le type de roue à roulettes pivotantes (3'), la surface supérieure (24) étant de plus pourvue de moyens de réception qui sont destinés à recevoir les roues (3) d'un second moyen de transport (1) empilé au-dessus d'un premier moyen de transport (1) de sorte qu'un certain nombre de ces moyens de transport peuvent être empilés et fixés horizontalement les uns au-dessus des autres, **caractérisé en ce que** la surface supérieure (24) est pourvue de deux canaux latéraux longs étroits (25) disposés parallèles aux côtés longs (21) et s'étirant depuis un côté court (22) à l'autre côté, les canaux latéraux longs (25) étant placés à une certaine distance les uns des autres qui est principalement égale à la distance entre les roues (3), comme vu à partir d'un côté court (22), dans lequel les moyens de transport (1) peuvent être placés les uns au-dessus des autres en les faisant rouler en prise les uns avec les autres dans la direction de la longueur.

2. Moyen de transport (1) selon la revendication (1) **caractérisé en ce que** la surface supérieure (24) est pourvue d'un rebord (26) utilisé pour positionner et fixer horizontalement des marchandises, placées au-dessus de la surface supérieure (24) et **en ce que** chaque extrémité du côté court des canaux latéraux longs (25) est munie d'une butée de canal (25'), laquelle butée de canal (25') est raccordée au rebord (26) ou étant une partie du rebord (26).

3. Moyen de transport (1) selon la revendication 1 ou 2, **caractérisé en ce que** les canaux latéraux longs (25) sont munis de butées de canaux internes (25") placées à une certaine distance de chacune des extrémités des côtés courts des canaux latéraux longs (25), laquelle distance est adaptée aux rayons des roues (3) de sorte qu'une roue (3) est empêchée de se déplacer vers l'intérieur dans le canal latéral long (25).

4. Moyen de transport (1) selon la revendication 3, **caractérisé en ce que** les butées de canaux internes (25") sont placées à une position correspondant à l'axe du pivotement vertical des roues du type roulettes pivotantes (3').

5. Moyen de transport (1) selon la revendication 3 ou 4, **caractérisé en ce que** la surface supérieure est pourvue d'une paire de canaux secondaires (27) placés parallèles aux côtés courts et coupant les canaux latéraux longs (25), **en ce que** les lignes centrales longitudinales de chacun des canaux secondaires (27) coïncident avec les lignes centrales de la butée de canal intérieur (25") et de ce fait aussi l'axe pivotant des roues du type à roulettes pivotantes (3').

6. Moyen de transport (1) selon la revendication 5, **caractérisé en ce que** chaque extrémité du côté court des canaux secondaires (27) est pourvue d'une butée de canal secondaire (27"), laquelle butée de canal secondaire (25') est raccordée au rebord (26) ou étant une partie du rebord (26).
